(19) Europäisches Patentamt / European Patent Office / Office européen des brevets

(11) **EP 2 075 630 A1**

(12) **EUROPEAN PATENT APPLICATION**

(43) Date of publication:
01.07.2009 Bulletin 2009/27

(51) Int Cl.:
*G03B 15/05* (2006.01)   *G02B 3/14* (2006.01)
*F21V 14/00* (2006.01)

(21) Application number: **07291641.4**

(22) Date of filing: **28.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Varioptic**
**69007 Lyon (FR)**

(72) Inventors:
• **Craen, Pierre**
 **4053 Embourg (BE)**
• **Maillard, Mathieu**
 **69002 Lyon (FR)**

(54) **Adaptative illumination device**

(57) The invention relates to an adaptative illumination device comprising a light source (32) for emitting an illumination beam (320) of a given half-irradiance angle ($\alpha$) and an electrically controlled optical element (31) for modifying said half-irradiance angle, wherein the optical element comprises a fluid chamber (39) at least partially delimited by a side wall (35), a base (33), and an optical phase element (34), the chamber containing a first and a second liquid (36;37) forming a liquid-liquid interface (38) moveable under the application of a voltage, and wherein the contact area (310) defined by the intersection of the moving interface (38) and the optical phase element (34) is caused to vary under the application of said voltage, resulting in the control of the illumination beam portion passing through said contact area.

**FIG. 3A**

## Description

## Field of the invention

The present invention relates to an illumination device with adaptative illumination. In particular, it applies to flash illumination devices, head lamps, illumination devices for barcode readers, medical imaging devices, room illumination etc.

## Description of the prior art

In many applications, there is a need for providing illumination of a scene at an angle that is suited to the scene coverage. For example head lamps, barcode readers or flash illumination devices need to have a system for adapting the irradiance angle of the illumination beam emitted by a light source. In barcode readers for example, a narrow bright beam will be necessary to illuminate a barcode that is positioned far away, while a wider light beam is required to illuminate the barcode when positioned closer to the source.

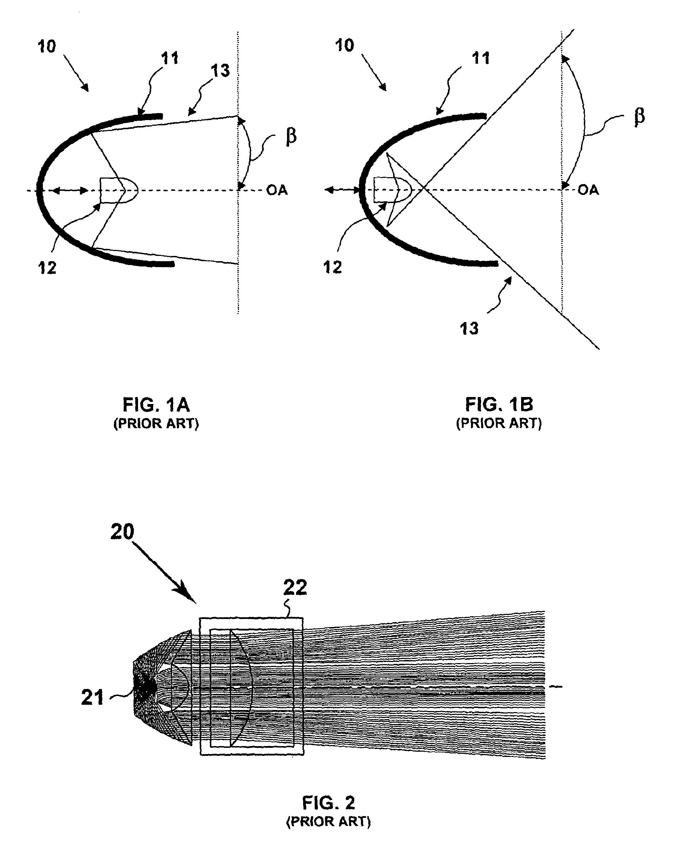

Figures 1A and 1B represent an exemplary embodiment of a conventional illumination device 10 with adjustable angle. It comprises a lamp 12 and a reflector 11, e.g. a Conical Parabolic Concentrator (CPC) reflector, with an average emission direction OA. In such devices, the half-irradiance angle $\beta$ of the emitted light beam 13, measured relatively to the average emission direction OA, is adjusted by moving the reflector 11 or the lamp 12 along the average emission direction OA with respect to each other, as shown in Figures 1A and 1B.

In such devices, the range of the illumination angle is limited to about 20°-40°. Moreover, the light source or the reflector needs to be moved mechanically. Moving one or the other element of the illumination device makes this solution complex and with low mechanic robustness. Further, moving is generally achieved by a screwing / unscrewing mechanism which makes difficult to have a reliable sealing of the device.

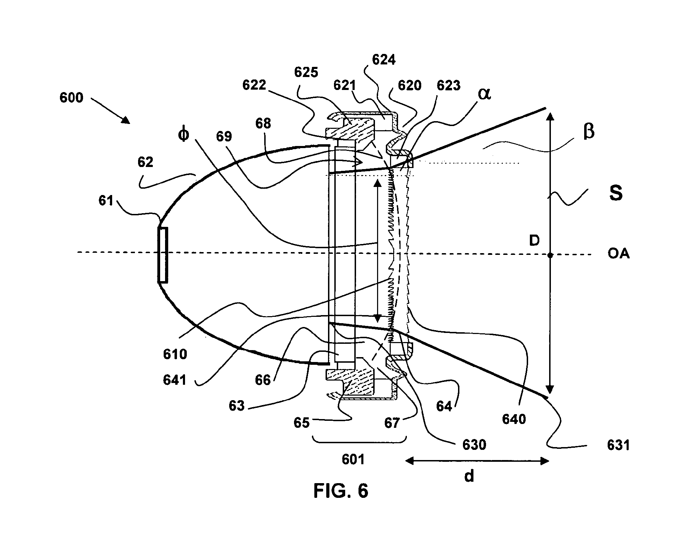

A flash illumination apparatus is further described in US 7,298,970. Figure 2 repesents Figure 6B of this patent. It discloses a flash illumination apparatus 20 comprising a light source 21 and a variable focus liquid lens 22. In this apparatus, the illumination angle is varied, based on the adjustement of the focal length of the liquid lens by application of a voltage, thus avoiding any mechanical displacement as in the above mentioned prior art. However, this apparatus presents a limited illumination angle range. As a matter of fact, the refractive index difference between the liquids generally used in a variable focus liquid lens can not be high enough to achieve a maximum illumination angle above 40° ($2x\beta$ as defined in Figure 1A and 1B). Such system is therefore not suited for applications where a wide illumination angle range as large as 60° ($2x\beta$) or above is needed.

Thus, there is a need for providing adaptative illumination devices with wide illumination angle ranges that overcome the drawbacks of the described conventional devices.

## Summary of the invention

The object of the invention is to provide a variable illumination device, also called "lighting zoom" in the following description, comprising an electrically controlled liquid optical element that allows a large range of variable illumination angle.

According to a first aspect, the invention provides an adaptative illumination device comprising:

- a light source for emitting an illumination beam of a given half-irradiance angle ($\alpha$), having an average emission direction OA, and
- an electrically controlled optical element for modifying said half-irradiance angle, the optical element comprising a fluid chamber at least partially delimited by a side wall, a base, and an optical phase element, said chamber containing a first fluid and a second fluid, said fluids having different refractive indices, being immiscible, and defining an interface that is caused to move along said side wall of the fluid chamber under the application of an electric voltage (V), wherein:

  - said base is oriented essentially perpendicular to the average emission direction and stands on the light source side,
  - said first fluid is being maintained in contact with said base,
  - said optical phase element is oriented essentially parallel to the base and has a refractive index similar to the refractive index of one of the fluids, and
  - the contact area defined by the intersection of the moving interface and the optical phase element is caused to vary under the application of said voltage, resulting in the control of the illumination beam portion passing through said contact area.

## Brief description of the drawings

These and other objects, features and advantages of the present invention will be explained in more details in the following description of particular exemplary embodiments made in a non-limiting manner with respect to the attached figures wherein:

Figures 1A and 1B, previously described, represent a conventional illumination device with adjustable angle;

Figure 2, previously described, illustrates a flash illumination apparatus comprising a liquid lens according to the prior art.

Figures 3A to 3C illustrate the operating principle of the adaptative illumination device according to the invention;

Figures 4A to 4C schematically illustrate the irradiance profile for three different voltages.

Figure 5 schematically represents an exemplary embodiment of the adaptative illumination device according to the invention;

Figure 6 schematically represents a further exemplary embodiment of the adaptative illumination device according to the invention;

Figures 7A to 7C illustrate the propagation of a light ray through the optical phase element of the illumination device of figure 6;

Figures 8A and 8B schematically represent two embodiments of the optical phase element of an electrically controlled optical element according to the illumination device of figure 6;

Figure 9 is a schematic diagram of an optical device, such as a camera, including an adaptative flash according to the invention.

Figure 10 is a schematic diagram of a barcode reader including an adaptative illumination source according to the invention.

## Detailed description

For the sake of clarity, identical elements have been denoted by the same reference numerals in various figures.

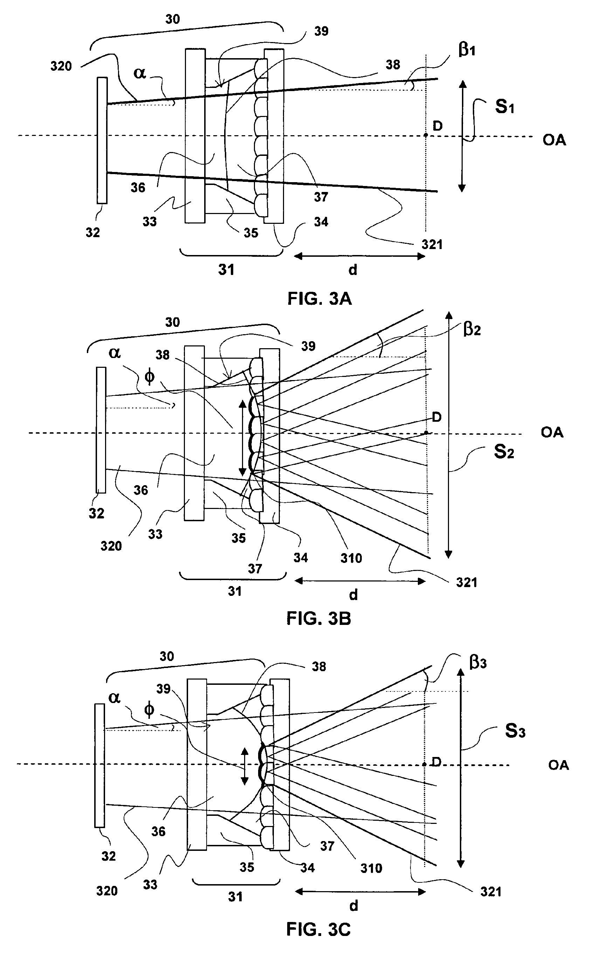

Figures 3A to 3C illustrate the operative principle of an adaptative illumination device 30 according to the invention. The adaptative illumination device 30 comprises a light source 32 and an electrically controlled optical element 31 centred on an average emission direction OA of the light source. The light source 32 emits an illumination beam 320 having a half-irradiance angle $\alpha$ measured relatively to the average emission direction OA. The illumination beam 320 enters into the electrically controlled optical element 31 and goes out with a half-irradiance angle, named $\beta1$, $\beta2$, $\beta3$ in fig.3A, 3B, 3C respectively, defined relatively to the average emission direction OA. In the further specification, the "in-going illumination beam" is the illumination beam 320 entering into the electrically controlled optical element 31 with the half-irradiance angle $\alpha$, and the "out-going illumination beam" is the illumination beam 321 exiting the element 31 with the half-irradiance angle $\beta$.

As shown on figures 3A to 3C, it is also referred in the following specification to the surface S (S1, S2, S3) of a fixed object positioned at a distance d from the lighting zoom 30 and illuminated by the out-going illumination beam 321. More precisely, d is defined as the distance measured on the average emission direction OA between the exit face of the lighting zoom 30 and the object referenced by the point D on the axis OA.

According to the invention, the half-irradiance angle $\beta$ of the out-going illumination beam 321, the illuminated surface S of the fixed object, and the light intensity on the surface S are caused to vary under the application of a voltage, according to the further described operating principle.

The electrically controlled optical element 31 comprises a hermetic fluid chamber 39, defined at least in part by a base 33, a side wall 35, and an optical phase element 34, substantially parallel to the base.

The base 33 is oriented essentially perpendicular to the average emission direction OA, and stands on the light source side. It is made of a transparent material, for example glass or plastic, and is fixed on the side wall 35 of the optical element 31, for example by glue. While a planar base is shown on Figures 3A to 3C, the base could be replaced by a fixed lens, with one or a plurality of curved surfaces, centred on the average emission direction OA of the optical element 31.

In this example, the side wall 35 has a symmetry of revolution, the axis of revolution corresponding substantially to the average emission direction OA of the source 32.

The fluid chamber 39 contains a first transparent liquid 36 having a refractive index n1 and a second transparent liquid 37 having a refractive index n2, different from n1, the two liquids being immiscible and having substantially the same density. In this example, the first liquid is an insulating liquid, for example an oily liquid comprising an alkane or a mixture of alkanes, possibly halogenated, and the second liquid is an electrically conductive liquid, for example an aqueous liquid containing salts. The first liquid 36 and the second liquid 37 form a liquid-liquid interface 38 that is moveable under the application of a voltage by electrowetting. The application of the voltage is made between two electrodes (not shown on figures 3A to 3C), a first electrode in contact with the second conductive liquid 36 and a second electrode insulated from the fluids. The application of the voltage allows changing the positioning of the edge of the liquid-liquid interface 38 on the internal part of the side wall 35, thereby changing the curvature of the interface 38 between liquids 36 and 37.

According to the applied voltage, the deformable interface 38 encounters the optical phase element 34, thus resulting in a variable contact area 310 between the first liquid 36 and the optical phase element 34.

In this example, the optical phase element 34 is a micro-lens array composed of micro-balls whose dimensions and index of refraction are adapted so that it can diffract the in going illumination beam under given conditions of applied voltage as described below. Further examples of optical phase element 34 are possible and will be described further.

In the example of Figures 3A to 3C, the refractive index n3 of the optical phase element 34 is matched with the refractive index n2 of the second liquid 37 and is different from the refractive index n1 of the first liquid 36. Therefore, when no voltage is applied (contact area 310 null), the optical phase element 34 is not "seen" by the in-going illumination beam 320 that gets through the optical element 34 without any modification of the propagation direction of the light rays (Figure 3A). When a voltage is applied, the contact area 310 increases and the portion of the illumination beam passing through the contact area 310 is diffracted, resulting in a modification of the propagation direction of the light rays (Figures 3B, 3C).

The modification of the propagation direction of the light rays as well as the quantity of light diffracted will depend on the nature of the optical phase element, and in particular on the difference between the indices of refraction of the optical phase element 34 and the first liquid 36. The higher this difference is the larger will be the diffractive effect. With an optical phase element being a micro-lens array composed of micro-balls, there will be two preferred directions of the out-going light beam, as shown in Figures 3A to 3C, the non diffracted and the diffracted directions. The diffracted direction corresponds to the maximum refracting angle at each ball lens.

In Figure 3A the contact area 310 is null, corresponding for example to a zero voltage. There is no diffractive effect and the out-going illumination beam 321 has a half-irradiance angle $\beta 1$ equal to the half-irradiance angle $\alpha$ of the in-going illumination beam 320. The illuminated surface S1 on the object depends on the half irradiance angle $\alpha$. This configuration corresponds to the initial state of the adaptive illumination device, where the outgoing illumination beam is the narrowest.

In figures 3B and 3C, a non-zero variable contact zone 310 is created, whose diameter $\phi$, measured along the normal to the average emission direction, is dependant of the applied voltage. In figure 3B, a high voltage V2 is applied to the optical element 31, resulting in a large contact zone and a large diffractive effect. The propagation direction of the light rays of the illumination beam portion passing through this contact area 310 is modified; the half-irradiance angle $\beta 2$ of the out-going illumination beam 321 is greater than angle $\alpha$ of the in-going illumination beam 320. The illuminated surface S2 is enlarged in comparison with surface S1 as angle $\beta 2$ is superior to $\alpha$. This corresponds to a wide illumination beam enabling large scene coverage.

In figure 3C, a non-zero voltage V3 is applied, V3 being inferior to V2. The resulting contact area 310 is of lesser extent $\phi$ than in figure 3B, thus leading to a smaller illumination beam portion passing through it. Half-irradiance angle $\beta 3$ of the out-going illumination beam is identical to $\beta 2$ as light rays are diffracted similarly to those in figure 3B but the amount of diffracted light in figure 3B is smaller since the contact area is smaller.

Thus, in this example, the distribution of the light intensity on the illuminated surface S3 will vary as function of the applied voltage, since a larger amount of the in-going illumination beam will be diffracted when a larger voltage is applied.

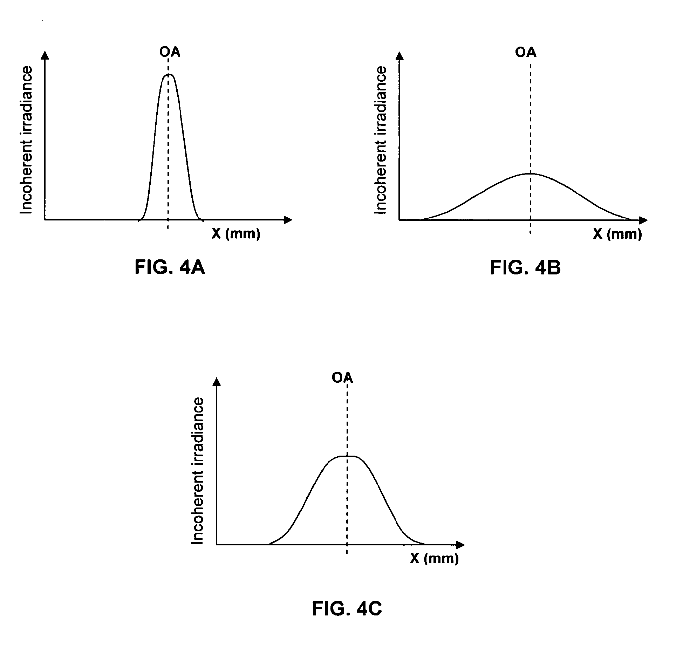

Figures 4A to 4C schematically illustrate the irradiance profile for three voltages, respectively no voltage in figure 4A, corresponding to Figure 3A, intermediate voltage in figure 4C, corresponding to Figure 3C and maximum voltage in figure 4B, corresponding to Figure 3B.

In the above example, the displacement of the liquid-liquid interface is obtained using the electrowetting effect. It will be apparent to those skilled in the art that other forces driven by electric means could be used in alternative embodiments, such as pressure-based forces used in micro-pump systems for example.

The light source 32 is preferably a spatially incoherent light source, for example a Light Emitting Diode (LED) or an arc lamp, more suited to illuminate a larger scene. Still, a coherent light, for example a laser light source such as a laser diode, could also be used.

In figures 3A to 3C, the refractive index n3 of the optical phase element 34 is chosen to match the refractive index n2 of the second liquid 37. In an alternative embodiment, the refractive index n3 can be chosen to match the refractive index n1 of the first liquid 36. In such case, a narrowest light beam configuration (no diffraction) will be achieved with application of a maximum voltage Vmax (largest contact zone). The half-irradiance-angle $\beta$ will increase with decreasing voltage.

A large number of optical phase elements 34 can be used in order to vary the illumination beam, such as refractive, diffractive or scattering optical elements. The light distribution of the out-going illumination beam will depend on the optical characteristics of the optical phase element 34. Diffractive elements comprise for example all types of lens arrays, such as uniform or non-uniform micro-balls arrays, multi focus Fresnel lenses, gratings. Refractive elements comprise for example concave or bi-concave lenses, gradient index lenses (GRIN lens) with a given spatial distribution of the index of refraction. In the case of a GRIN lens, the index of refraction is chosen to be at least locally different from the first liquid refraction index.

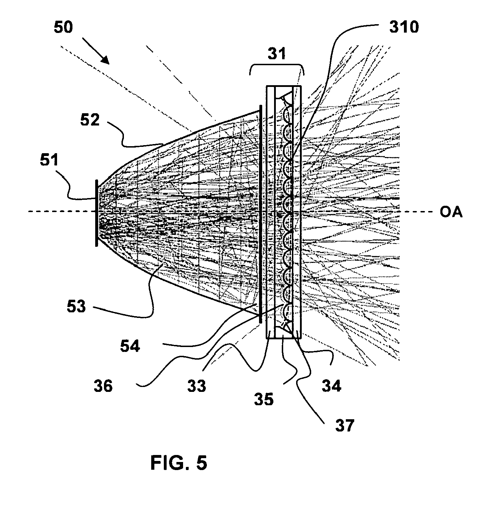

Figure 5 is a schematic cross-section of an embodiment of an adaptative illumination device according to the present invention. The adaptative illumination device 50 comprises a light source 51 and an electrically control optical element 31, for example similar to those described in Figure 3A to 3C. The device 50 further comprises an optical light concentrator 52, advantageously a Conical Parabolic Concentrator (CPC) reflector, comprising a main body 53 and a front part 54. The main body 53 has a parabolic shape and its size is for example 10 mm along the average emission direction OA. The front part 54 is for example a circular plate of 20 mm diameter, made of glass, corresponding to a micro-lens array. The light source 51 is an extended light source, for example an array of LEDs, with light rays emitted at different points on the light source surface, thus going out along multiple directions, as shown in the figure 5. The optical light concentrator 52 allows concentrating light rays emitted by the light source 51, which limits irradiance loss of the illumination beam entering the electrically controlled optical system 31.

The optical light concentrator 52 and the electrically controlled optical element 31 are fixed together, for example by gluing an external portion of the front part 54 of the reflector 52 to the base 33 or the side wall 35.

The contact zone 310 created between the deformable interface and the optical phase element 34 is shown as its maximal extent. It leads to a wide outgoing illumination beam with a high amount of diffracted light.

In this embodiment, the optical phase element 34 is a micro-lens array composed of micro-balls, made of glass, and having a 0.5 mm radius, and an index of refraction of about 1.5. In an alternative embodiment the micro-lens array can be composed of micro-balls having different radius, for example with a ratio of 3 between the micro-ball sizes, and having a non uniform distribution of the micro-balls on the lens array. This specific lens-array enables to get an out-going illumination beam having different half-irradiance angles ($\beta$ as previously defined) since light rays are diffracted in different directions according to the lens array portion they get through.

Figure 6 schematically represents a further exemplary embodiment of the adaptative illumination device according to the invention. The operating principle is similar to the one described in reference to figures 3A to 3C but using a different optical phase element.

The lighting zoom 600 comprises a light source 61 emitting an illumination beam 630 having an average emission direction OA, and an optical light concentrator 62 having a main body and a front part facing an electrically controlled optical element 601. The illumination beam 630 enters the element 601 with an angle $\alpha$, for example equal to 5°. The illumination beam 631 going out the electrically controlled optical element 601 has an half-irradiance angle $\beta$, advantageously comprised between 5 and 60°. S is the illuminated surface of a fixed object placed at a distance d from the lighting zoom 600.

The light source 61 and optical light concentrator 62 are similar to those described in previous embodiments (Figure 3A to 3C and Fig.5).

The whole optical element 601 presents for example a symmetry of revolution, having an axis of revolution corresponding to the average emission direction OA.

The electrically controlled optical element 601 comprises a hermetic fluid chamber 69, defined at least in part by a base 63, a side wall 65, and an optical phase element 64, substantially parallel to the base, in this example a multi focus Fresnel lens. It also comprises a cap 620 to which optical phase element 64 is fixed, for example by glue 623. The cap 620 and the side wall 65 are separated by a gasket 621. Cap 620 comprises a substantially cylindrical side part 624, while side wall 65 comprises a substantially cylindrical external part 625, and gasket 621 is positioned between the parts 624 and 625, to ensure the tightness of the electrically controlled optical element 601.

The base 63 is oriented essentially perpendicular to the average emission direction OA, and stands on the light source side. It is made of a transparent material, for example glass or plastic, and is fixed on the side wall 65 of the optical element 601, for example by glue 622. While a planar base is shown in the figures, this base could be replaced by a fixed lens, with one or a plurality of curved surfaces.

The fluid chamber 69 contains a first transparent liquid 66 of refractive index n1 and a second transparent liquid 67 that cannot be mixed with the first liquid 66, with a different refractive index n2, and preferably a similar density. In the figure 6, n1 is smaller than n2, for example n1=1.4 and n2=1.7. Preferably, the first liquid is an insulating liquid and the second liquid is an electrically conductive liquid.

As previously described in reference to Figures 3A to 3C, first liquid 66 and second liquid 67 form a liquid-liquid interface 68 that is moveable by application of a voltage between two electrodes, using the electrowetting effect. According to the applied voltage, the deformable interface 68 encounters the optical phase element 64, thus resulting in a variable contact area 610 between the first liquid 66 and the optical phase element 64. In this example, a junction zone between 2 differentially inclined portions on the internal part of the side wall 65 play the role of a stop for the deformable liquid-liquid interface 68.

In this embodiment, a first electrode is formed by the cap 620, made of a stamped metal, e.g. in stainless steel, that is in contact with the second conductive liquid 67. A second electrode is formed by the side wall 65, for example made of stainless steel, and is insulated from the liquids 67 and 68 by a coating (not shown). The coating also covers the base 63. The coating is made of a material that has wetting properties allowing keeping the insulating liquid in contact with the base 63 of the optical element 601. Coating is for example both insulating and hydrophobic, or can comprise 2 layers, one lower layer being insulating and one upper layer in contact with the insulating liquid 66 being hydrophobic. The coating comprises amorphous fluoropolymers or hydrocarbon polymers, for example fluorinated parylene, and preferably comprises one of parylene C and parylene F.

In figure 6, a maximal voltage value Vmax is applied, thus creating a contact area 610 with an extent $\phi$ being maximum. Light rays of the illumination beam portion passing through the contact area 610 are diffracted by the multi-focus Fresnel lens 64. The out-going illumination beam 631 has its maximum half-irradiance angle $\beta$, for example 60°, resulting in a maximum illuminated surface S.

According to this example, the multi-focus Fresnel lens 64 has two "textured" side surfaces 640, 641, the textured side surfaces being defined as non planar surfaces comprising annular zones covered with small facets having inclined planes relatively to a plane perpendicular to the average emission direction OA.

The first external textured surface 640 at the exit face of lighting zoom 600 comprises small facets homogeneously distributed onto the surface, and having a fixed inclination angle.

The second internal textured surface 641, in contact with the liquids, comprises small facets heterogeneously distributed onto the surface, and having inclined surfaces with different angles.

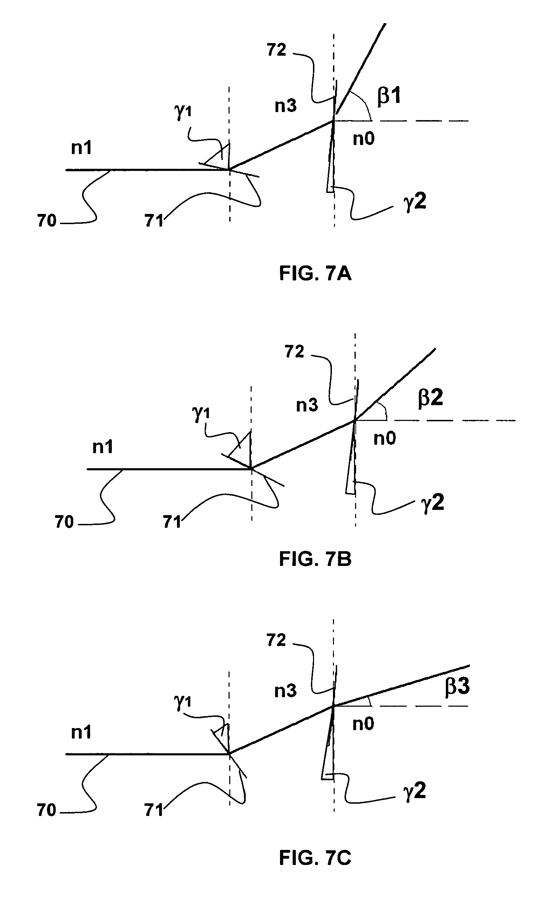

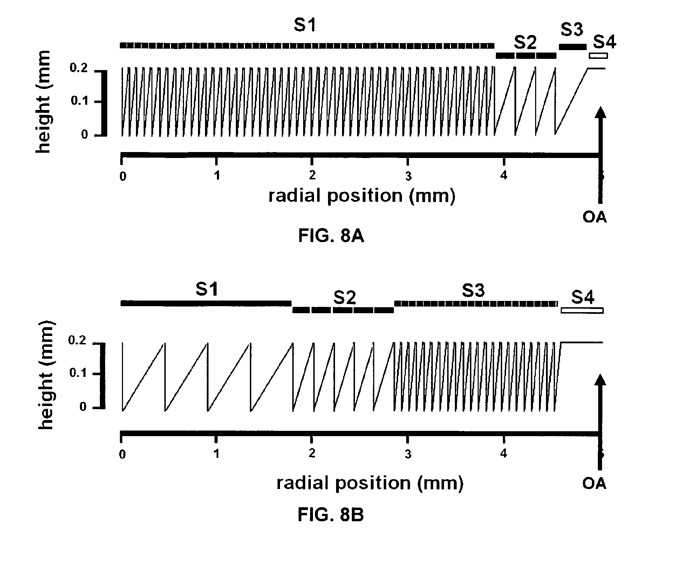

The facet distribution on surfaces 640 and 641 is calculated following the principle as described in reference to the figures 7A to 7C and 8A/8B.

The inclination angles $\gamma1$ and $\gamma2$ of the facets of the surfaces 641, 640 respectively, defined as the angles between a plane perpendicular to the average emission direction OA and the plane of the facet, are determined using the Snell-Descartes Law:

$$ni.sin(\gamma i) = no.sin(\gamma o)$$

where ni and no are the refractive indices of the media i and o respectively, $\gamma i$ is the angle formed between the incident light ray and the normal to the interface at the incident point, and $\gamma o$ is the angle formed between the refracted light ray and the normal to the interface at the incident point.

Figures 7A to 7C illustrate a light ray 70 going through the electrically controlled optical element of an illumination device similar to that of figure 6 in different zones of the optical phase element.

A first interface 71 is created between the first insulating liquid 66, for example of refractive index n1=1.4, and the multi-focus Fresnel lens 64 having for example a refractive index n3=1.7. Interface 71 corresponds to the surface 641 in contact with the liquids of the multi-focus Fresnel lens. Surface 641 comprises facets having a variable inclination angle $\gamma1$. A second interface 72 is created between the multi-focus Fresnel lens 64 and the air having a refractive index of $n_0=1$. It corresponds to the surface 640 of the multi-focus Fresnel lens. The surface 640 comprises facets having a fixed inclination angle $\gamma2$, for example $\gamma2=7°$. This value is fixed such as to avoid total reflection of the out-going light ray.

The Snell-Descartes law is applied for the calculation of the two interfaces 71 and 72 such that the light ray 70 going out the illumination device 600 will have different half-irradiance angles as function of the impact point on the phase optical element, for example $\beta1=60°$ in figure 7A, $\beta1=40°$ in figure 7B and $\beta3=20°$ in figure 7C.

Table 1 below summarizes the calculated inclination angles of the facets forming the internal surface 641 of the multi-focus Fresnel lens 64 according to the present embodiment of the lighting zoom 600.

|  | $\gamma1$ | $\gamma2$ |
|---|---|---|
| $\beta1 = 60°$ | 77° | 7° |
| $\beta2 = 40°$ | 65° | 7° |
| $\beta3 = 20°$ | 35° | 7° |

A specific spatial distribution of the facets on the surface 641 of the multi-focus Fresnel lens 64 is also calculated according to two exemplary embodiments illustrated on figures 8A and 8B and allowing different illumination distribution (amount of light) on the object to be illuminated.

In both embodiments, the facets distribution on the surface 641 is calculated using the "cos[4]" Law for the illumination distribution. The "cos[4]" Law traduces the energy loss of the illumination beam when going away from a central axis, corresponding here to the average emission direction OA. It is expressed by:

$$E = E_0 cos(\beta)^2$$

Where $E_0$ is the total energy of the illumination beam going out the lighting zoom, E is the energy of the illumination beam at a given half-irradiance angle $\beta$.

Figure 8A show the facet distribution according to the first embodiment in the case where the refractive index n1 of the first insulating fluid is bigger than the refractive index n2 of the second conductive fluid, for example n1=1.4 and n2=1.7.

Figure 8B illustrates the reverse refractive index configuration, where for example n1=1.7 and n2=1.4.

In both cases, refractive index n3 of the Fresnel lens matches n2.

On these figures, facets are distributed on a given number of surfaces of different size, for example four surfaces S1 to S4, whose size is calculated so as to satisfy the "cos[4]" Law .

According to a variant, the facets distribution on the surface 641 can be calculated such that the illumination distribution is angularly uniform. In this case, the light energy on each of the fourth surface S1 to S4 is equivalent and the width of each surface is calculated in order to satisfy this criteria.

Although the Fresnel lens design is hereby made for specific values, it will be apparent for those skilled in the art that it is not limited to these values, and that multiple configurations are possible according to the desired illumination distribution on the object to be illuminated.

In the previous examples, control of the liquid-liquid interface has been described using one applied voltage. In an alternative embodiment, a plurality of different voltages for controlling the liquid-liquid interface 68 and the contact area 610 can be applied. This enables to have an asymmetric deformation of the liquid-liquid interface 68, and further to control the shape of the contact area 610. The resulting out-going illumination beam can have a different size ratio according to horizontal and vertical directions. In this alternative embodiment, the second electrode is for example a segmented electrode, or the side wall 65 is made of a conductive material, for example a moulded conductive polymer material such as a liquid crystal polymer, having conductivity in the range $10^4$ to $10^7$ Ohm.cm and forming said second electrode. Equally spaced electrical contact points, for example formed of a metal having a relatively high conductivity such as copper, are provided to apply one or a plurality of different voltages on the electrode.

The lighting zoom according to the invention can be used in many applications, including, but not limited to, all optical miniaturized devices that need a variable scene coverage illumination, in particular mobile phone cameras with an adaptative flash, adaptative head-lights for automotive, data capture devices such as bar code readers, medical imaging devices such endoscopes or surgery flash lamp devices.

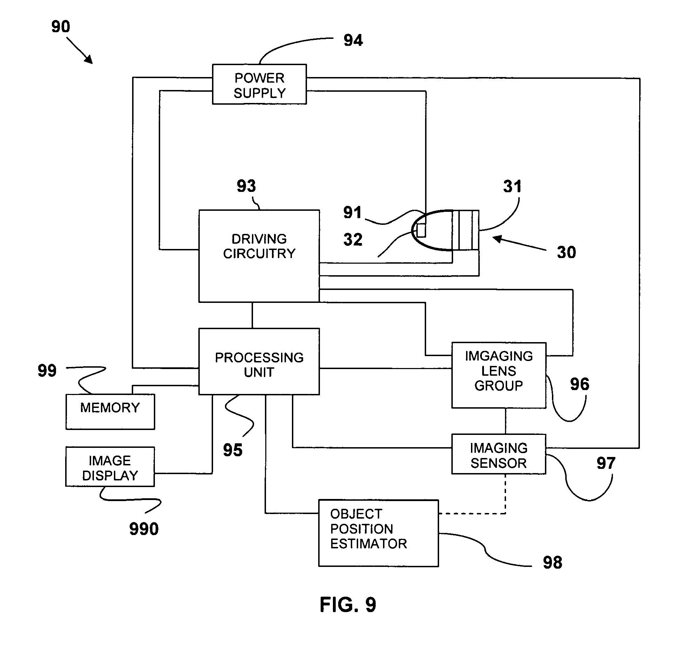

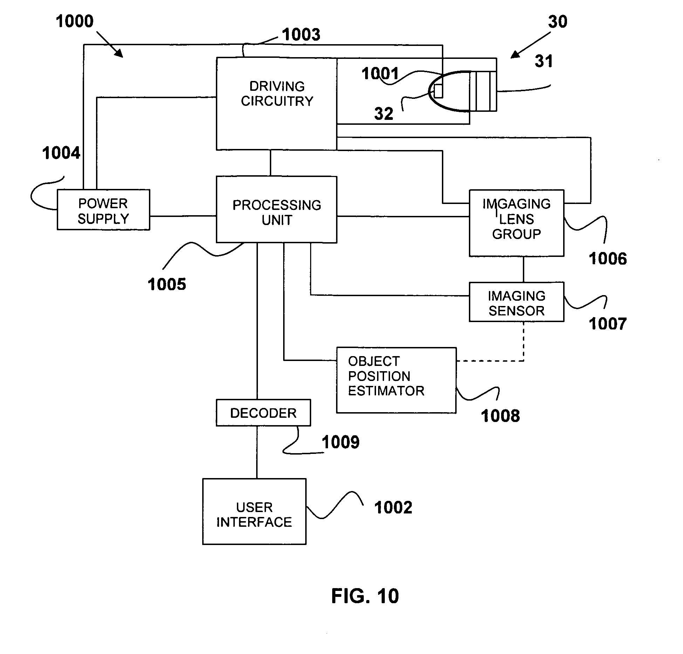

Figures 9 and 10 illustrate optical devices including a variable illumination device according to the invention.

Figure 9 is schematic diagram of an imaging apparatus 90 including an adaptative flash 30 according to the invention, which is for example a mobile phone, a compact digital camera, or alternative electronic device. Imaging apparatus 90 comprises an imaging lens group 96 and an imaging sensor 97, which captures the image formed from light rays received by imaging lens group 96.

Driving circuitry 93 is provided connected to the electrodes (not shown) of the electrically controlled optical element 31 of the adaptative flash 30. The driving circuitry 93 generates oscillating voltage signals to each of the electrodes. The driving circuitry 93 for example comprises one or more frequency oscillators for generating signals at one or more given frequencies. These signals can then be amplified before being provided between first and second electrodes of the optical element 31. Driving circuitry 93 also provides driving voltages for the imaging lens group 96 including for example focus and zoom functions.

A processing unit 95 is provided in the imaging apparatus 90, which is for example an image signal processor or a base band processor of a mobile phone. Processing unit 9 implements algorithms for controlling the driving circuitry 93, and also controls the image sensor 97 to capture images. Processing unit 95 receives captured images from image sensor 97 and stores them in a memory 99 and/or displays them on an image display 990.

An object position estimator 98 provides to the processing unit 95 a signal giving information on the distance of the object to be illuminated. This signal is taken into account in calculation allowing the control of the driving circuitry generating driving voltages for the control of the optical element 31 of the flash device 30. The object position estimator 98 is for example a telemeter. In some embodiments, it can be a manual actuator that enables to adjust manually the distance and the corresponding signal sent to the signal processing unit 95. In further embodiments, this signal on the object distance can be based on image information given by the image sensor 97 (refers to the dashed line relationship in the figure 9) and treated in the processing unit 95.

A power supply unit 94 provides supply voltages to the driving circuitry 93, the image sensor 97, the processing unit 95, and light source 32.

Figure 10 is a schematic diagram of a barcode reader system 1000 including an adaptative illumination device 30 according to the invention. As for the device of Figure 9, it comprises an imaging lens group 1006, an imaging sensor 1007, driving circuitry 1003, power supply 1004, position estimator 1008 and processing unit 1005. A decoder 1009 and an user interface 1002 are used to proceed to the bare coder reading.

The lighting zoom according to the present invention can also be used for room illumination, for example using stacked illumination devices manually or electronically controlled. The stacked illumination devices can for example be independently controlled.

## Claims

1. An adaptative illumination device comprising:

    - a light source (32) for emitting an illumination beam (320) of a given half-irradiance angle ($\alpha$), having an average emission direction OA, and
    - an electrically controlled optical element (31) for modifying said half-irradiance angle, the optical element comprising a fluid chamber (39) at least partially delimited by a side wall (35), a base (33), and an optical phase element (34), said chamber containing a first fluid (36) and a second fluid (37), said fluids having different refractive indices, being immiscible, and defining an interface (38) that is caused to move along said side wall of the fluid chamber under the application of an electric voltage (V), wherein:

        - said base (33) is oriented essentially perpendicular to the average emission direction and stands on the light source side (32),
        - said first fluid (36) is being maintained in contact with said base (33),
        - said optical phase element (34) is oriented essentially parallel to the base (33) and has a refractive index similar to the refractive index of one of the fluids, and
        - the contact area (310) defined by the intersection of the moving interface (38) and the optical phase element (34) is caused to vary under the application of said voltage, resulting in the control of the illumination beam portion passing through said contact area.

2. The adaptative illumination device of claim 1, wherein said optical phase element (34) has a refractive index similar to the refractive index of said second fluid (37).

3. The adaptative illumination device of claim 1, wherein said optical phase element has a refractive index similar to the refractive index of said first fluid (36).

4. The adaptative illumination device according to claim 1, wherein the base (33) comprises a coating whose wetting properties allow the first fluid (36) to be maintained in contact with said base (33).

5. The adaptative illumination device according to claim 1, further comprising an optical light concentrator (52,62) to adjust the half-irradiance angle α of the illumination beam (320) entering into the electrically controlled optical system (31).

6. The adaptative illumination device of any of claims 1 to 5, wherein the optical phase element (34) is a diffractive element.

7. The adaptative illumination device of claim 6, wherein the optical phase element (34) is a micro lens array.

8. The adaptative illumination device of claim 6, wherein the optical phase element (34) is a multi focus Fresnel lens.

9. The adaptative illumination device of any of claims 1 to 5, wherein the optical phase element (34) is a refractive element.

10. The adaptative illumination device of any of claims 1 to 5, wherein the optical phase element (34) is a scattering element.

11. The adaptative illumination device of any of the preceding claims, wherein the contact surface (310) between the first and the second liquids is deformable according to the electrowetting effect.

12. The adaptative illumination device of any of the preceding claims, wherein the light source (32) is an incoherent light source.

13. The adaptative illumination device of claim 12, wherein the light source (32) is a Light Emitting Diode or an arc lamp.

14. A camera flash apparatus comprising an illumination device of any of the preceeding claims.

15. A barcode reader including an illumination device of any of claims 1 to 13.

**FIG. 1A**
(PRIOR ART)

**FIG. 1B**
(PRIOR ART)

**FIG. 2**
(PRIOR ART)

FIG. 3A

FIG. 3B

FIG. 3C

FIG. 4A

FIG. 4B

FIG. 4C

**FIG. 5**

**FIG. 6**

**FIG. 7A**

**FIG. 7B**

**FIG. 7C**

FIG. 8A

FIG. 8B

**90**

**94**

POWER
SUPPLY

**93**

DRIVING
CIRCUITRY

**91**
**32**

**31**

**30**

PROCESSING
UNIT

**99**

MEMORY

IMGAGING
LENS
GROUP

**96**

**95**

IMAGE
DISPLAY

**990**

IMAGING
SENSOR

**97**

OBJECT
POSITION
ESTIMATOR

**98**

**FIG. 9**

**1000**

**1003**

**30**

**31**

**1001**

DRIVING
CIRCUITRY

**32**

**1004**

POWER
SUPPLY

PROCESSING
UNIT

IMGAGING
LENS
GROUP

**1006**

**1005**

IMAGING
SENSOR

**1007**

OBJECT
POSITION
ESTIMATOR

**1008**

DECODER

**1009**

USER
INTERFACE

**1002**

FIG. 10

**European Patent Office**

# EUROPEAN SEARCH REPORT

Application Number

EP 07 29 1641

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/119307 A (KONINKL PHILIPS ELECTRONICS NV [NL]; HENDRIKS BERNARDUS H W [NL]; VAN) 15 December 2005 (2005-12-15) * page 4, line 10 - page 10, line 2; figures 1-4 * | 1-15 | INV. G03B15/05 G02B3/14 F21V14/00 |
| A | US 2006/045501 A1 (LIANG RONGGUANG [US] ET AL) 2 March 2006 (2006-03-02) * paragraph [0030] - paragraph [0050]; figures 1,2A,2B,3A-3C,4,5,6A-6D,7A,7B,8A,8B * | 1-15 | |
| A | EP 1 798 958 A (VARIOPTIC [FR]) 20 June 2007 (2007-06-20) * paragraph [0018] - paragraph [0024]; figures 3A,3B * | 1-15 | |
| A | US 2001/017985 A1 (TSUBOI TAKAYUKI [JP] ET AL) 30 August 2001 (2001-08-30) * paragraph [0169] - paragraph [0176]; figures 20A,20B * | 1-15 | |
| A | JP 2002 162507 A (CANON KK) 7 June 2002 (2002-06-07) * abstract; figures 1,3,4,6 * | 1-15 | TECHNICAL FIELDS SEARCHED (IPC) G03B H05B B60Q F21V G02B |

The present search report has been drawn up for all claims

| Place of search | Date of completion of the search | Examiner |
|---|---|---|
| Munich | 28 March 2008 | Tomezzoli, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 29 1641

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2008

| Patent document cited in search report | | Publication date | Patent family member(s) | | Publication date |
|---|---|---|---|---|---|
| WO 2005119307 | A | 15-12-2005 | JP | 2008502923 T | 31-01-2008 |
| US 2006045501 | A1 | 02-03-2006 | NONE | | |
| EP 1798958 | A | 20-06-2007 | WO | 2007068761 A1 | 21-06-2007 |
| US 2001017985 | A1 | 30-08-2001 | NONE | | |
| JP 2002162507 | A | 07-06-2002 | NONE | | |

EPO FORM P0459

For more details about this annex : see Official Journal of the European Patent Office, No. 12/82

**EP 2 075 630 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7298970 B

The list of references is filed by the applicant for the reader's convenience.

**20**